(19) Europäisches Patentamt
European Patent Office
Office européen des brevets

(11) **EP 4 353 493 A1**

(12) **EUROPEAN PATENT APPLICATION**
published in accordance with Art. 153(4) EPC

(43) Date of publication:
**17.04.2024 Bulletin 2024/16**

(21) Application number: **22819939.4**

(22) Date of filing: **31.03.2022**

(51) International Patent Classification (IPC):
**B60C 1/00** (2006.01)    **C08L 9/00** (2006.01)
**C08L 9/06** (2006.01)    **C08L 45/00** (2006.01)
**C08K 3/04** (2006.01)    **C08K 3/36** (2006.01)

(52) Cooperative Patent Classification (CPC):
**B60C 1/00; C08K 3/04; C08K 3/36; C08L 9/00; C08L 9/06; C08L 45/00**

(86) International application number:
**PCT/JP2022/016941**

(87) International publication number:
**WO 2022/259751 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2021 JP 2021096133**

(71) Applicant: **BRIDGESTONE CORPORATION**
**Chuo-ku**
**Tokyo 104-8340 (JP)**

(72) Inventor: **AOKI, Kohei**
**Tokyo 104-8340 (JP)**

(74) Representative: **Marks & Clerk LLP**
**15 Fetter Lane**
**London EC4A 1BW (GB)**

(54) **RUBBER COMPOSITION FOR TIRE, TREAD RUBBER, AND TIRE**

(57)    Provided is a rubber composition for tires that can achieve both tire gripping performance and production operability at a high level. A rubber composition for tires comprises: a rubber component; and a softener, wherein the rubber component contains at least one selected from styrene-butadiene rubber and butadiene rubber, the softener contains a hydrogenated resin having a softening point of more than 110°C and a polystyrene-equivalent weight-average molecular weight of 200 g/mol to 1600 g/mol, and a terpene-based resin, and the hydrogenated resin and the terpene-based resin satisfy the formula: a mass ratio of the hydrogenated resin/the terpene-based resin $\geq$ 1.4/1.

**Description**

TECHNICAL FIELD

The present disclosure relates to a rubber composition for tires, a tread rubber, and a tire.

BACKGROUND

Conventionally, improvement in the gripping performance of tire treads is desired, and studies are conducted on increasing the amount of softeners such as resin and oil in order to improve the gripping performance. For example, WO 2015/079703 A1 (PTL 1) discloses the use of, in the tread rubber of a tire, a rubber composition obtained by blending a thermoplastic resin and a filler containing silica with a rubber component containing 70 mass% or more of natural rubber to thus improve the braking performance of the tire on both dry and wet road surfaces (hereinafter abbreviated as "gripping performance").

CITATION LIST

Patent Literature

PTL 1: WO 2015/079703 A1

SUMMARY

(Technical Problem)

If a large amount of softener is blended in the rubber composition, however, the rubber composition in an unvulcanized state adheres to production equipment, causing significant deterioration in production operability. There is thus a need for technology that can improve tire gripping performance to a high level without impairing production operability.

It could therefore be helpful to provide a rubber composition for tires that can achieve both tire gripping performance and production operability at a high level, and a tread rubber made of the rubber composition.

It could also be helpful to provide a tire having both gripping performance and production operability at a high level.

(Solution to Problem)

We thus provide the following.

A rubber composition for tires according to the present disclosure is a rubber composition for tires comprising: a rubber component; and a softener, wherein the rubber component contains at least one selected from styrene-butadiene rubber and butadiene rubber, the softener contains a hydrogenated resin having a softening point of more than 110°C and a polystyrene-equivalent weight-average molecular weight of 200 g/mol to 1600 g/mol, and a terpene-based resin, and the hydrogenated resin and the terpene-based resin satisfy the following formula:

$$\text{a mass ratio of the hydrogenated resin/the terpene-based resin} \geq 1.4/1.$$

A tread rubber according to the present disclosure is made of the foregoing rubber composition for tires.

A tire according to the present disclosure comprises the foregoing tread rubber.

(Advantageous Effect)

It is thus possible to provide a rubber composition for tires that can achieve both tire gripping performance and production operability at a high level, and a tread rubber made of the rubber composition.

It is also possible to provide a tire having both gripping performance and production operability at a high level.

DETAILED DESCRIPTION

A rubber composition for tires, a tread rubber, and a tire according to the present disclosure will be described in detail below by way of embodiments.

<Rubber composition for tires>

A rubber composition for tires according to the present disclosure comprises a rubber component and a softener. In the rubber composition for tires according to the present disclosure, the rubber component contains at least one selected from styrene-butadiene rubber and butadiene rubber, the softener contains a hydrogenated resin having a softening point of more than 110°C and a polystyrene-equivalent weight-average molecular weight of 200 g/mol to 1600 g/mol and a terpene-based resin, and the hydrogenated resin and the terpene-based resin satisfy the following formula:

$$\text{the mass ratio of the hydrogenated resin/the terpene-based resin} \geq 1.4/1.$$

The rubber composition for tires according to the present disclosure contains at least one selected from styrene-butadiene rubber and butadiene rubber as a rubber component, and thus has sufficient breaking resistance as a rubber composition for tires.

The rubber composition for tires according to the present disclosure also contains a hydrogenated resin having a softening point of more than 110°C and a polystyrene-equivalent weight-average molecular weight of 200 g/mol to 1600 g/mol and a terpene-based resin as a softener. Such a rubber composition, when used in a tire, can improve the gripping performance of the tire.

In the rubber composition for tires according to the present disclosure, the mass ratio of the hydrogenated resin/the terpene-based resin is 1.4/1 or more. In this way, the adhesion of the rubber composition in an unvulcanized state to production equipment can be prevented to thus improve production operability.

The rubber composition for tires according to the present disclosure can therefore achieve both tire gripping performance and production operability at a high level.

(Rubber component)

The rubber composition for tires according to the present disclosure contains a rubber component, and the rubber component contains at least one selected from styrene-butadiene rubber (SBR) and butadiene rubber (BR) and may further contain other rubber components. The rubber component preferably contains both styrene-butadiene rubber (SBR) and butadiene rubber (BR).

Styrene-butadiene rubber (SBR) and butadiene rubber (BR) are relatively hard to adhere and have excellent breaking resistance. Styrene-butadiene rubber is highly effective in improving the gripping performance of the tire, while butadiene rubber is highly effective in improving the wear resistance. Hence, as a result of the rubber component containing at least one selected from styrene-butadiene rubber (SBR) and butadiene rubber (BR), a rubber composition suitable for tire use can be obtained.

The styrene-butadiene rubber (SBR) and the butadiene rubber (BR) may be unmodified or modified, and may be a blend of unmodified and modified rubbers.

The total proportion of the styrene-butadiene rubber (SBR) and the butadiene rubber (BR) in the rubber component is preferably 70 mass% or more, more preferably 80 mass% or more, further preferably 90 mass% or more, and may be 100 mass%.

The proportion of the styrene-butadiene rubber (SBR) in the rubber component is preferably 70 mass% or more and more preferably 80 mass% or more, and preferably 100 mass% or less and more preferably 90 mass% or less.

The proportion of the butadiene rubber (BR) in the rubber component is preferably 0 mass% or more and more preferably 10 mass% or more, and preferably 30 mass% or less and more preferably 20 mass% or less.

The proportion of styrene units in the rubber component is preferably 10 mass% or more and 50 mass% or less. Herein, the proportion of styrene units in the rubber component refers to the content of styrene-derived monomer units in the entire rubber component. If the proportion of styrene units in the rubber component is 10 mass% or more, the effect of improving the gripping performance of the tire is enhanced. If the proportion of styrene units in the rubber component is 50 mass% or less, the low-temperature embrittlement resistance of the rubber composition is improved. The proportion of styrene units in the rubber component can be determined by an infrared method (Morero method).

The rubber component may further contain other rubbers. The content of the other rubbers in the rubber component is preferably 30 mass% or less, more preferably 20 mass% or less, further preferably 10 mass% or less, and may be 0 mass%. Examples of the other rubbers include natural rubber (NR), isoprene rubber (IR), chloroprene rubber (CR), styrene-isoprene rubber (SIR), acrylonitrile-butadiene rubber (NBR), butyl rubber (IIR), and halogenated butyl rubber. These other rubbers may be used singly or in a mixture of two or more.

The whole or part of the rubber component may be oil-extended. In the case where the rubber component is oil-extended, the extender oil is classified as the below-described softener.

(Softener)

The rubber composition for tires according to the present disclosure contains a softener, and the softener contains a hydrogenated resin having a softening point of more than 110°C and a polystyrene-equivalent weight-average molecular weight of 200 g/mol to 1600 g/mol and a terpene-based resin and may further contain other softener components.

The hydrogenated resin and the terpene-based resin satisfy the following formula:

$$\text{the mass ratio of the hydrogenated resin/the terpene-based resin} \geq 1.4/1.$$

If the content of the hydrogenated resin is less than 1.4 times the content of the terpene-based resin, the rubber composition adheres to production equipment, causing deterioration in production operability. The mass ratio of the hydrogenated resin/the terpene-based resin is preferably 1.4/1 or more from the viewpoint of preventing the adhesion of the rubber composition to the production equipment and improving the production operability. The mass ratio of the hydrogenated resin/the terpene-based resin is preferably 6/1 or less from the viewpoint of the gripping performance.

The softener is a compounding agent that has the effect of softening the rubber composition. Specific examples thereof include the foregoing hydrogenated resin and terpene-based resin, other thermoplastic resins, and liquid softener components such as oil and liquid polymer. Herein, liquid softener components such as oil and liquid polymer are liquid at 25°C (room temperature).

The total content of the softener is preferably 30 parts by mass or more and 170 parts by mass or less per 100 parts by mass of the rubber component. If the total content of the softener is 30 parts by mass or more per 100 parts by mass of the rubber component, the effect of improving the gripping performance of the tire is enhanced. If the total content of the softener is 170 parts by mass or less per 100 parts by mass of the rubber component, the production operability of the rubber composition is improved. The total content of the softener is more preferably 60 parts by mass or more and further preferably 80 parts by mass or more per 100 parts by mass of the rubber component, from the viewpoint of the gripping performance of the tire. The total content of the softener is more preferably 140 parts by mass or less and further preferably 120 parts by mass or less per 100 parts by mass of the rubber component, from the viewpoint of the production operability of the rubber composition.

- Hydrogenated resin -

The rubber composition for tires according to the present disclosure contains a hydrogenated resin, and the hydrogenated resin has a softening point of more than 110°C and a polystyrene-equivalent weight-average molecular weight of 200 g/mol to 1600 g/mol. The use of the rubber composition containing such a hydrogenated resin in a tire can improve the gripping performance of the tire.

If the softening point of the hydrogenated resin is 110°C or less, the tire in which the rubber composition is used cannot be fully reinforced. The softening point of the hydrogenated resin is preferably 116°C or more, more preferably 120°C or more, even more preferably 123°C or more, even more preferably 126°C or more, and further preferably 128°C or more, from the viewpoint of the breaking resistance of the tire. The softening point of the hydrogenated resin is preferably 160°C or less, more preferably 150°C or less, even more preferably 145°C or less, even more preferably 141°C or less, and further preferably 136°C or less, from the viewpoint of the gripping performance of the tire.

If the polystyrene-equivalent weight-average molecular weight of the hydrogenated resin is less than 200 g/mol, the hydrogenated resin precipitates from the tire, making it difficult to fully achieve the effect of the hydrogenated resin. If the polystyrene-equivalent weight-average molecular weight of the hydrogenated resin is more than 1600 g/mol, the hydrogenated resin is less compatible with the rubber component.

The polystyrene-equivalent weight-average molecular weight of the hydrogenated resin is preferably 300 g/mol or more, more preferably 400 g/mol or more, even more preferably 500 g/mol or more, even more preferably 550 g/mol or more, even more preferably 600 g/mol or more, even more preferably 650 g/mol or more, and further preferably 700 g/mol or more, from the viewpoint of preventing the precipitation of the hydrogenated resin from the tire and suppressing the deterioration of the tire appearance. The polystyrene-equivalent weight-average molecular weight of the hydrogenated resin is preferably 1570 g/mol or less, more preferably 1530 g/mol or less, even more preferably 1500 g/mol or less, even more preferably 1470 g/mol or less, even more preferably 1430 g/mol or less, even more preferably 1400 g/mol or less, even more preferably 1370 g/mol or less, even more preferably 1330 g/mol or less, even more preferably 1300 g/mol or less, even more preferably 1200 g/mol or less, even more preferably 1100 g/mol or less, even more preferably 1000 g/mol or less, and further preferably 950 g/mol or less, from the viewpoint of increasing the compatibility of the hydrogenated resin with the rubber component and enhancing the effect of the hydrogenated resin.

The ratio ($Ts_{HR}/Mw_{HR}$) of the softening point ($Ts_{HR}$) (unit: °C) of the hydrogenated resin to the polystyrene-equivalent weight-average molecular weight ($Mw_{HR}$) (unit: g/mol) of the hydrogenated resin is preferably 0.075 or more, more preferably 0.083 or more, even more preferably 0.095 or more, even more preferably 0.104 or more, even more preferably 0.125 or more, even more preferably 0.135 or more, even more preferably 0.14 or more, and further preferably 0.141 or more. The ratio ($Ts_{HR}/Mw_{HR}$) is preferably 0.25 or less, and more preferably 0.23 or less.

The softening point and polystyrene-equivalent weight-average molecular weight of the hydrogenated resin can be determined by the methods described in the EXAMPLES section below.

The content of the hydrogenated resin is preferably 10 parts by mass or more and 80 parts by mass or less per 100 parts by mass of the rubber component. If the content of the hydrogenated resin in the rubber composition is 10 parts by mass or more per 100 parts by mass of the rubber component, the effect of improving the gripping performance of the tire is enhanced. If the content of the hydrogenated resin in the rubber composition is more than 80 parts by mass per 100 parts by mass of the rubber component, the low-temperature embrittlement resistance of the rubber composition deteriorates. If the content of the hydrogenated resin is 10 parts by mass or more and 80 parts by mass or less per 100 parts by mass of the rubber component, the gripping performance of the tire in which the rubber composition is used can be further improved while suppressing the deterioration of the low-temperature embrittlement resistance of the rubber composition. The content of the hydrogenated resin in the rubber composition is more preferably 20 parts by mass or more and particularly preferably 30 parts by mass or more per 100 parts by mass of the rubber component, from the viewpoint of the gripping performance of the tire. The content of the hydrogenated resin in the rubber composition is more preferably 70 parts by mass or less and particularly preferably 60 parts by mass or less per 100 parts by mass of the rubber component, from the viewpoint of the low-temperature embrittlement resistance of the rubber composition.

The "hydrogenated resin" herein means a resin obtained by reducing and hydrogenating a resin.

Examples of the resin as raw material of the hydrogenated resin include $C_5$-based resin, $C_5/C_9$-based resin, $C_9$-based resin, terpene-based resin (including terpene-aromatic compound-based resin), and dicyclopentadiene-based resin. These resins may be used singly or in combination of two or more.

In this specification, resins obtained by reducing and hydrogenating terpene-based resins are classified as hydrogenated resins.

Examples of the $C_5$-based resin include aliphatic petroleum resins obtained by (co)polymerizing a $C_5$ fraction obtained by pyrolysis of naphtha in the petrochemical industry.

The $C_5$ fraction usually includes an olefinic hydrocarbon such as 1-pentene, 2-pentene, 2-methyl-1-butene, 2-methyl-2-butene, or 3-methyl-1-butene, a diolefinic hydrocarbon such as 2-methyl-1,3-butadiene, 1,2-pentadiene, 1,3-pentadiene, or 3-methyl-1,2-butadiene, or the like. Commercial products may be used as the Cs-based resin.

The $C_5/C_9$-based resin refers to a $C_5/C_9$-based synthetic petroleum resin. Examples of the $C_5/C_9$-based resin include solid polymers obtained by polymerizing a petroleum-derived $C_5$-$C_{11}$ fraction using a Friedel-Crafts catalyst such as $AlCl_3$ or $BF_3$. Specific examples include copolymers mainly composed of styrene, vinyltoluene, $\alpha$-methylstyrene, indene, etc.

As the $C_5/C_9$-based resin, a resin with little $C_9$ or higher component is preferable from the viewpoint of the compatibility with the rubber component. Here, including "little $C_9$ or higher component" means that the amount of $C_9$ or higher component in the total amount of the resin is less than 50 mass%, and preferably 40 mass% or less. Commercial products may be used as the $C_5/C_9$-based resin.

The $C_9$-based resin refers to a $C_9$-based synthetic petroleum resin. Examples of the $C_9$-based resin include solid polymers obtained by polymerizing a $C_9$ fraction using a Friedel-Crafts catalyst such as $AlCl_3$ or $BF_3$.

Examples of the $C_9$-based resin include copolymers mainly composed of indene, $\alpha$-methylstyrene, vinyltoluene, etc.

The terpene-based resin is a solid resin obtained by polymerization, using a Friedel-Crafts catalyst, of turpentine oil obtained simultaneously when obtaining rosin from Pinus trees or a polymerization component separated from the turpentine oil. Examples thereof include $\beta$-pinene resin and $\alpha$-pinene resin. The terpene-based resin includes a terpene-aromatic compound-based resin. Typical examples of the terpene-aromatic compound-based resin include terpene-phenol resin and styrene-terpene resin. The terpene-phenol resin can be obtained using a method by which terpenes and various phenols are reacted using a Friedel-Crafts catalyst, or further condensed with formalin. The styrene-terpene resin can be obtained using a method by which styrene and terpenes are reacted using a Friedel-Crafts catalyst. The terpenes of the raw material are not limited, but are preferably monoterpene hydrocarbons such as $\alpha$-pinene and limonene, more preferably terpenes containing $\alpha$-pinene, and particularly preferably $\alpha$-pinene.

Examples of the dicyclopentadiene-based resin include resins obtained by polymerizing dicyclopentadiene using a Friedel-Crafts catalyst such as $AlCl_3$ or $BF_3$.

The resin as raw material of the hydrogenated resin may contain, for example, a resin ($C_5$/DCPD-based resin)

obtained by copolymerizing a $C_5$ fraction and dicyclopentadiene (DCPD).

It is assumed here that the $C_5$/DCPD-based resin is included in the dicyclopentadiene-based resin in the case where the dicyclopentadiene-derived component in the total amount of the resin is 50 mass% or more, and included in the $C_5$-based resin in the case where the dicyclopentadiene-derived component in the total amount of the resin is less than 50 mass%. The same applies when the third component, etc., are contained in small amounts.

The hydrogenated resin is preferably at least one selected from the group consisting of hydrogenated Cs-based resin, hydrogenated $C_5$/$C_9$-based resin, hydrogenated dicyclopentadiene-based resin (hydrogenated DCPD-based resin), and hydrogenated terpene-based resin, more preferably at least one selected from the group consisting of hydrogenated $C_5$-based resin and hydrogenated $C_5$/$C_9$-based resin, and further preferably hydrogenated $C_5$-based resin, from the viewpoint of enhancing the compatibility between the rubber component and the hydrogenated resin and further improving the gripping performance of the tire in which the rubber composition is used. Moreover, the hydrogenated resin is preferably a resin having a hydrogenated DCPD structure or a hydrogenated cyclic structure at least in its monomer.

These hydrogenated resins may be used singly or in combination of two or more.

- Terpene-based resin -

The rubber composition for tires according to the present disclosure contains a terpene-based resin. The use of the rubber composition containing a terpene-based resin in a tire can improve the gripping performance of the tire.

The terpene-based resin is a solid resin obtained by polymerization, using a Friedel-Crafts catalyst, of turpentine oil obtained simultaneously when obtaining rosin from Pinus trees or a polymerization component separated from the turpentine oil. Examples thereof include β-pinene resin and α-pinene resin. The terpene-based resin includes a terpene-aromatic compound-based resin. A typical example of the terpene-aromatic compound-based resin is terpene-phenol resin. The terpene-phenol resin can be obtained using a method by which terpenes and various phenols are reacted using a Friedel-Crafts catalyst, or further condensed with formalin. The terpenes of the raw material are not limited, but are preferably monoterpene hydrocarbons such as α-pinene and limonene, more preferably terpenes containing α-pinene, and particularly preferably α-pinene.

The content of the terpene-based resin is preferably 5 parts by mass or more and 35 parts by mass or less per 100 parts by mass of the rubber component. If the content of the terpene-based resin in the rubber composition is 5 parts by mass or more per 100 parts by mass of the rubber component, the effect of improving the gripping performance of the tire is enhanced. If the content of the terpene-based resin in the rubber composition is more than 35 parts by mass per 100 parts by mass of the rubber component, the low-temperature embrittlement resistance of the rubber composition deteriorates. The content of the terpene-based resin in the rubber composition is more preferably 5 parts by mass or more and further preferably 10 parts by mass or more per 100 parts by mass of the rubber component, from the viewpoint of the gripping performance of the tire. The content of the terpene-based resin in the rubber composition is more preferably 35 parts by mass or less and further preferably 30 parts by mass or less per 100 parts by mass of the rubber component, from the viewpoint of the low-temperature embrittlement resistance of the rubber composition.

- Other softeners -

The rubber composition for tires according to the present disclosure may further contain other softeners besides the foregoing hydrogenated resin and terpene-based resin. Examples of the other softeners include thermoplastic resins other than the foregoing hydrogenated resin and terpene-based resin, and liquid softener components such as oil and liquid polymer.

Examples of the thermoplastic resins other than the foregoing hydrogenated resin and terpene-based resin include $C_5$-based resin, $C_9$-based resin, $C_5$/$C_9$-based resin, rosin-based resin, dicyclopentadiene resin, and alkylphenol-based resin.

The "oil" is a general term for the extender oil contained in the rubber component and the liquid oil added as a compounding agent for the rubber composition. Examples thereof include petroleum softeners such as aromatic oil, paraffinic oil, and naphthenic oil, and vegetable softeners such as palm oil, castor oil, cottonseed oil, and soybean oil. Of these, petroleum softeners such as aromatic oil, paraffinic oil, and naphthenic oil are preferred. The mass ratio of the extender oil : the compounding agent oil is preferably 1:1 to 10:1, from the viewpoint of the operability.

The liquid polymer preferably is liquid at 25°C (room temperature) and has a weight-average molecular weight of 5,000 to 100,000. Examples of such a liquid polymer include liquid polybutadiene, liquid polyisoprene, and liquid polystyrene-butadiene.

(Carbon black)

The rubber composition for tires according to the present disclosure preferably contains carbon black. The carbon black can reinforce the rubber composition and improve the breaking resistance of the rubber composition, and also contributes to further improvement in the gripping performance of the tire in which the rubber composition is used.

The carbon black is not limited, and examples thereof include GPF, FEF, HAF, ISAF, and SAF grade carbon blacks. These carbon blacks may be used singly or in combination of two or more.

The content of the carbon black in the rubber composition is preferably 10 parts by mass or more and more preferably 20 parts by mass or more per 100 parts by mass of the rubber component, from the viewpoint of the breaking resistance of the rubber composition and the gripping performance of the tire in which the rubber composition is used. The content of the carbon black in the rubber composition is preferably 140 parts by mass or less and more preferably 130 parts by mass or less per 100 parts by mass of the rubber component, from the viewpoint of the wear resistance of the rubber composition.

(Silica)

The rubber composition for tires according to the present disclosure preferably contains silica. As a result of the rubber composition containing silica, the gripping performance (particularly wet gripping performance) of the tire in which the rubber composition is used can be further improved.

The nitrogen adsorption specific surface area (BET method) of the silica is preferably 80 $m^2/g$ or more and less than 330 $m^2/g$. If the nitrogen adsorption specific surface area (BET method) of the silica is 80 $m^2/g$ or more, the tire in which the rubber composition is used can be fully reinforced. If the nitrogen adsorption specific surface area (BET method) of the silica is less than 330 $m^2/g$, the elastic modulus of the rubber composition is kept from being excessively high, and the wet gripping performance of the tire in which the rubber composition is used can be improved. The nitrogen adsorption specific surface area (BET method) of the silica is more preferably 100 $m^2/g$ or more, even more preferably 120 $m^2/g$ or more, even more preferably 140 $m^2/g$ or more, even more preferably 150 $m^2/g$ or more, even more preferably 170 $m^2/g$ or more, even more preferably 180 $m^2/g$ or more, even more preferably 190 $m^2/g$ or more, and further preferably 195 $m^2/g$ or more, from the viewpoint of further improving the breaking resistance of the tire. The nitrogen adsorption specific surface area (BET method) of the silica is more preferably 300 $m^2/g$ or less, even more preferably 280 $m^2/g$ or less, and further preferably 270 $m^2/g$ or less, from the viewpoint of further improving the wet gripping performance of the tire.

The specific surface area by cetyltrimethylammonium bromide adsorption (CTAB) of the silica is preferably 150 $m^2/g$ or more, more preferably 150 $m^2/g$ to 300 $m^2/g$, further preferably 150 $m^2/g$ to 250 $m^2/g$, and particularly preferably 150 $m^2/g$ to 220 $m^2/g$. If the CTAB is 150 $m^2/g$ or more, the tire in which the rubber composition is used can be fully reinforced. If the CTAB is 300 $m^2/g$ or less, the elastic modulus of the rubber composition is kept from being excessively high, and the wet gripping performance of the tire in which the rubber composition is used can be improved.

Examples of the silica include wet silica (hydrous silicate), dry silica (anhydrous silicate), calcium silicate, and aluminum silicate. Of these, wet silica is preferable. These silicas may be used singly or in combination of two or more.

The content of the silica in the rubber composition is preferably 10 parts by mass or more and more preferably 15 parts by mass or more per 100 parts by mass of the rubber component, from the viewpoint of the gripping performance (particularly wet gripping performance) of the tire. The content of the silica in the rubber composition is preferably 110 parts by mass or less and more preferably 100 parts by mass or less per 100 parts by mass of the rubber component, from the viewpoint of the wear resistance of the rubber composition.

The rubber composition for tires according to the present disclosure preferably contains both of the foregoing carbon black and silica. The total content of the silica and the carbon black is preferably 70 parts by mass or more and 140 parts by mass or less per 100 parts by mass of the rubber component. If the total content of the silica and the carbon black is 70 parts by mass or more per 100 parts by mass of the rubber component, the effect of improving the gripping performance of the tire is enhanced. If the total content of the silica and the carbon black is 140 parts by mass or less, the wear resistance of the rubber composition is improved. The total content of the silica and the carbon black is more preferably 80 parts by mass or more per 100 parts by mass of the rubber component, from the viewpoint of the gripping performance of the tire. The total content of the silica and the carbon black is more preferably 120 parts by mass or less per 100 parts by mass of the rubber component, from the viewpoint of the wear resistance of the rubber composition.

(Styrene-based thermoplastic elastomer)

The rubber composition for tires according to the present disclosure may contain a styrene-based thermoplastic elastomer (TPS). The styrene-based thermoplastic elastomer (TPS) has a styrene-based polymer block (hard segment) and a conjugated diene-based polymer block (soft segment). The styrene-based polymer portion forms a physical crosslink to form a crosslinking point, while the conjugated diene-based polymer block provides rubber elasticity. The double bonds of the conjugated diene-based polymer block (soft segment) may be partly or wholly hydrogenated.

The styrene-based thermoplastic elastomer (TPS) is thermoplastic, whereas the rubber component (preferably diene-based rubber) is not thermoplastic. Accordingly, in this specification, the styrene-based thermoplastic elastomer (TPS) is not included in the rubber component. The content of the styrene-based thermoplastic elastomer (TPS) is preferably in the range of 1 part to 30 parts by mass per 100 parts by mass of the rubber component.

Examples of the styrene-based thermoplastic elastomer (TPS) include styrene/butadiene/styrene (SBS) block copolymer, styrene/isoprene/styrene (SIS) block copolymer, styrene/butadiene/isoprene/styrene (SBIS) block copolymer, styrene/isoprene (SI) block copolymer, styrene/butadiene/isoprene (SBI) block copolymer, styrene/ethylene/butylene/styrene (SEBS) block copolymer, styrene/ethylene/propylene/styrene (SEPS) block copolymer, styrene/ethylene/ethylene/propylene/styrene (SEEPS) block copolymer, styrene/ethylene/butylene (SEB) block copolymer, styrene/ethylene/propylene (SEP) block copolymer, and styrene/ethylene/ethylene/propylene (SEEP) block copolymer.

(Other components)

In addition to the foregoing rubber component, softener, carbon black, silica, and styrene-based thermoplastic elastomer, the rubber composition for tires according to the present disclosure may optionally contain various components typically used in the rubber industry. For example, a silane coupling agent, an antioxidant, stearic acid, zinc oxide (zinc white), a vulcanization accelerator, a vulcanizing agent, and the like may be appropriately selected and added in a range that does not impede the object of the present disclosure. Commercial products may be suitably used as these compounding agents.

In the case where the rubber composition for tires according to the present disclosure contains silica, the rubber composition preferably contains a silane coupling agent in order to enhance the effect of the silica. Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. The content of the silane coupling agent is preferably in the range of 2 parts to 20 parts by mass and more preferably in the range of 5 parts to 15 parts by mass per 100 parts by mass of the silica.

Examples of the antioxidant include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the antioxidant is not limited, but is preferably in the range of 0.1 parts to 15 parts by mass and more preferably in the range of 1 part to 10 parts by mass per 100 parts by mass of the rubber component.

Examples of the vulcanization accelerator include sulfenamide-based vulcanization accelerators, guanidine-based vulcanization accelerators, thiazole-based vulcanization accelerators, thiuram-based vulcanization accelerators, and dithiocarbamate-based vulcanization accelerators. Examples of the vulcanizing agent include sulfur. The total content of the vulcanization system (vulcanization package) including the vulcanization accelerator, vulcanizing agent, and stearic acid is not limited, but is preferably in the range of 1 part to 25 parts by mass and more preferably in the range of 5 parts to 20 parts by mass per 100 parts by mass of the rubber component.

(Production method for rubber composition)

The production method for the rubber composition is not limited. For example, the rubber composition can be produced by blending the foregoing rubber component and softener and optionally various components selected as appropriate and subjecting the mixture to kneading, warming, extrusion, etc. The obtained rubber composition can be vulcanized to obtain vulcanized rubber.

The kneading conditions are not limited, and various conditions such as the input volume of the kneading device, the rotation speed of the rotor, the ram pressure, the kneading temperature, the kneading time, and the type of the kneading device may be appropriately selected according to the purpose. Examples of the kneading device include a Banbury mixer, an intermixer, a kneader, and a roll typically used for kneading of rubber compositions.

The warming conditions are not limited, and various conditions such as the warming temperature, the warming time, and the warming device may be appropriately selected according to the purpose. Examples of the warming device include a warming roll machine typically used for warming of rubber compositions.

The extrusion conditions are not limited, and various conditions such as the extrusion time, the extrusion speed, the extrusion device, and the extrusion temperature may be appropriately selected according to the purpose. Examples of the extrusion device include an extruder typically used for extrusion of rubber compositions. The extrusion temperature may be determined as appropriate.

The device, method, conditions, etc., for performing the vulcanization are not limited, and may be appropriately selected according to the purpose. Examples of the vulcanization device include a molding vulcanizer with a mold typically used for vulcanization of rubber compositions. As a vulcanization condition, the temperature is, for example, about 100°C to 190°C.

<Tread rubber>

A tread rubber according to the present disclosure is made of the above-described rubber composition for tires. The tread rubber according to the present disclosure, as a result of being made of the above-described rubber composition for tires, can achieve both tire gripping performance and production operability at a high level.

The tread rubber according to the present disclosure may be used in new tires or retreaded tires.

The tread rubber according to the present disclosure is particularly suitable as a tread rubber for motorcycle tires. Since motorcycle tires are required to have high gripping performance, the tread rubber according to the present disclosure is particularly suitable.

<Tire>

A tire according to the present disclosure comprises the above-described tread rubber. The tire according to the present disclosure, as a result of comprising the above-described tread rubber, has both gripping performance and production operability at a high level.

The tire according to the present disclosure is particularly suitable as a motorcycle tire. Since motorcycle tires are required to have high gripping performance, the tire according to the present disclosure is particularly suitable.

The tire according to the present disclosure may be obtained by first forming a tire using an unvulcanized rubber composition and then vulcanizing the tire, or by first forming a tire using semi-vulcanized rubber resulting from a preliminary vulcanization process or the like and then fully vulcanizing the tire, depending on the intended tire type. The tire according to the present disclosure is preferably a pneumatic tire. The pneumatic tire may be filled with ordinary air or air with an adjusted partial pressure of oxygen, or may be filled with an inert gas such as nitrogen, argon, or helium.

EXAMPLES

The presently disclosed techniques will be described in more detail below by way of examples, although the present disclosure is not limited to these examples.

<Method of analyzing hydrogenated resin>

The softening point and weight-average molecular weight of the hydrogenated resin are measured by the following methods.

(1) Softening point

The softening point of the hydrogenated resin is measured in accordance with JIS-K2207-1996 (ring and ball method).

(2) Weight-average molecular weight

The average molecular weight of the hydrogenated resin is measured by gel permeation chromatography (GPC) under the following conditions, and the polystyrene-equivalent weight-average molecular weight is calculated.

- Column temperature: 40°C.
- Injection amount: 50 $\mu$L.
- Carrier and flow rate: Tetrahydrofuran 0.6 mL/min.
- Sample preparation: About 2.5 mg of resin component was dissolved in 10 mL of tetrahydrofuran.

<Preparation of rubber composition>

The rubber compositions other than that of Comparative Example 3 were prepared by kneading using a typical kneading device according to the formulations shown in Table 1. The rubber composition of Comparative Example 3 is equally prepared by kneading.

<Evaluation of rubber composition>

For each of the rubber compositions other than that of Comparative Example 3, the gripping performance and production operability were evaluated by the following methods. For the rubber composition of Comparative Example 3, the gripping performance and production operability are evaluated by the following methods. The results are shown in Table 1.

(3) Gripping performance

The loss tangent (tan $\delta$) of each of the rubber compositions other than that of Comparative Example 3 was measured with a frequency of 52 Hz, an initial strain of 2%, a dynamic strain of 1%, and a temperature of 50°C using a spectrometer produced by Ueshima Seisakusho Co., Ltd., and expressed as an index with tan $\delta$ of Comparative Example 1 being 100. Also, tan $\delta$ of the rubber composition of Comparative Example 3 is equally expressed as an index. A larger index value indicates higher tan $\delta$ and better gripping performance.

(4) Production operability

The adhesion between each of the rubber compositions other than that of Comparative Example 3 in an unvulcanized state and metal at 90°C was measured using a tack meter, and expressed as an index with the reciprocal of the adhesion of Comparative Example 1 being 100. The adhesion of the rubber composition of Comparative Example 3 is equally expressed as an index. A larger index value indicates less adhesion and better production operability.

[Table 1]

| Formulation (Part by mass) | Comparative Example 1 | Comparative Example 2 | Comparative Example 3 | Comparative Example 4 | Comparative Example 5 | Example 1 | Example 2 |
|---|---|---|---|---|---|---|---|
| BR *1 | 15 | 15 | 15 | 15 | 15 | 15 | 15 |
| SBR *2 | 85 | 85 | 85 | 85 | 85 | 85 | 85 |
| (Extender oil) | 32 | 32 | 32 | 32 | 32 | 32 | 32 |
| Carbon black *3 | 87 | 87 | 87 | 87 | 87 | 87 | 87 |
| Silica *4 | 18 | 18 | 18 | 18 | 18 | 18 | 18 |
| Oil *5 | 22 | 22 | 28 | 22 | 22 | 22 | 28 |
| Resin A (hydrogenated resin) *6 | 23 | 46 | 30 | 31 | 31 | 31 | 38 |
| Resin B (terpene-based resin) *7 | 23 | - | 23 | - | - | 15 | 15 |
| Resin C (other resin) *8 | - | - | - | 15 | - | - | - |
| Resin D (other resin) *9 | - | - | - | - | 15 | - | - |
| Silane coupling agent *10 | 2 | 2 | 2 | 2 | 2 | 2 | 2 |
| Antioxidant *11 | 7 | 7 | 7 | 7 | 7 | 7 | 7 |
| Vulcanization package *12 | 15 | 15 | 15 | 15 | 15 | 15 | 15 |

(continued)

| Evaluation | | | Comparative Example 1 | Comparative Example 2 | Comparative Example 3 | Comparative Example 4 | Comparative Example 5 | Example 1 | Example 2 |
|---|---|---|---|---|---|---|---|---|---|
| | Gripping performance | Index | 100 | 90 | 101 | 92 | 100 | 104 | 105 |
| | Production operability | Index | 100 | 161 | 84 | 173 | 120 | 150 | 117 |

*1 BR: Butadiene rubber, modified polymer synthesized by the following method.

*2 SBR: Styrene-butadiene rubber, proportion of styrene units (bound styrene content) = 35.5 mass%, "Tafden E581" produced by Asahi Kasei Corporation, oil extended rubber containing 37.5 parts by mass of extender oil (softener, liquid at 25°C) per 100 parts by mass of rubber component, the content of rubber component being shown in the upper row and the content of extender oil being shown in the lower row.

*3 Carbon black: "Asahi #107" produced by Asahi Carbon Co., Ltd.

*4 Silica: Specific surface area by cetyltrimethylammonium bromide adsorption (CTAB) = 191 $m^2$/g, nitrogen adsorption specific surface area (BET method) = 245 $m^2$/g.

*5 Oil: Softener (liquid at 25°C), "A/O MIX" produced by JX Nippon Oil & Energy Corporation.

*6 Resin A: Hydrogenated resin (hydrogenated Cs-based resin), "Impera$^®$ E1780" (Impera is a registered trademark in Japan, other countries, or both) produced by Eastman, softening point = 130°C, weight-average molecular weight (Mw) = 909 g/mol.

*7 Resin B: Terpene-based resin (terpene-phenol resin), "YS POLYSTER S145" produced by Yasuhara Chemical Co., Ltd.

*8 Resin C: Resin ($C_9$-based resin) other than hydrogenated resin and terpene-based resin, "Nisseki Neopolymer 140" produced by Nippon Oil Corporation.

*9 Resin D: Resin (alkylphenol resin) other than hydrogenated resin and terpene-based resin, "R7521P" produced by Si Group-Ribecourt S.A.S.

*10 Silane coupling agent: "ABC-856" produced by Shin-Etsu Chemical Co., Ltd.

*11 Antioxidant: Total amount including "SUNTIGHT A" produced by Seiko-Chemical Co., Ltd. and "Antigen 6C" produced by Sumitomo Chemical Co., Ltd.

*12 Vulcanization package: Total amount including vulcanization accelerator, sulfur, and stearic acid.

<Synthesis method for BR (*1)>

2.4 kg of cyclohexane and 300 g of 1,3-butadiene were charged into a nitrogen-purged 5 L autoclave under nitrogen. A catalyst obtained by reacting and aging a cyclohexane solution of neodymium versatate (0.09 mmol), a toluene solution of methylalumoxane (hereafter also referred to as "MAO") (1.8 mmol), a toluene solution of diisobutylaluminum hydride (hereafter also referred to as "DIBAH") (5.0 mmol) and diethylaluminum chloride (0.18 mmol), and 1,3-butadiene (4.5 mmol) at 50°C for 30 minutes as catalyst components beforehand was charged into the autoclave, and polymerization was carried out at 80°C for 60 minutes. The reaction conversion rate of 1,3-butadiene was approximately 100%. 200 g of this polymer solution was taken out, and a methanol solution containing 1.5 g of 2,4-di-tert-butyl-p-cresol was added to terminate the polymerization. The solvent was then removed by steam stripping, and drying was performed with a roll adjusted to 110°C to obtain a pre-modification polymer.

Further, the remaining polymer solution was kept at a temperature of 60°C, a toluene solution of 3-glycidoxypropyltrimethoxysilane (4.5 mmol) was added, and they were reacted for 30 minutes. Following this, a toluene solution of tetra-2-ethylhexyl titanate (13.5 mmol) was added, and mixed for 30 minutes. A methanol solution containing 1.5 g of 2,4-di-tert-butyl-p-cresol was then added to obtain 2.5 kg of a modified polymer solution.

The modified polymer solution was then added to 20 L of an aqueous solution adjusted to pH 10 with sodium hydroxide, and a condensation reaction was carried out with desolvation at 110°C for 2 hours. The reaction product was dried with a roll at 110°C to obtain a modified polymer.

As can be understood from Table 1, the rubber composition of each Example according to the present disclosure was superior in both gripping performance and production operability to the rubber composition of Comparative Example 1 in which the mass ratio of hydrogenated resin/ terpene-based resin was less than 1.4/1.

The rubber compositions of Comparative Examples 2, 4, and 5 containing hydrogenated resin but not containing terpene-based resin were unable to improve gripping performance.

## Claims

1. A rubber composition for tires, comprising:

   a rubber component; and
   a softener,
   wherein the rubber component contains at least one selected from styrene-butadiene rubber and butadiene rubber,
   the softener contains a hydrogenated resin having a softening point of more than 110°C and a polystyrene-equivalent weight-average molecular weight of 200 g/mol to 1600 g/mol, and a terpene-based resin, and
   the hydrogenated resin and the terpene-based resin satisfy the following formula:

$$a\ mass\ ratio\ of\ the\ hydrogenated\ resin/the\ terpene\text{-}based\ resin \geq 1.4/1.$$

2. The rubber composition for tires according to claim 1, wherein a content of the hydrogenated resin is 10 parts by mass or more and 80 parts by mass or less per 100 parts by mass of the rubber component.

3. The rubber composition for tires according to claim 1 or 2, wherein a total content of the softener is 30 parts by mass or more and 170 parts by mass or less per 100 parts by mass of the rubber component.

4. The rubber composition for tires according to any one of claims 1 to 3, wherein a proportion of styrene units in the rubber component is 10 mass% or more and 50 mass% or less.

5. The rubber composition for tires according to any one of claims 1 to 4, further comprising carbon black.

6. The rubber composition for tires according to claim 5, further comprising silica,
   wherein a total content of the silica and the carbon black is 70 parts by mass or more and 140 parts by mass or less per 100 parts by mass of the rubber component.

7. A tread rubber made of the rubber composition for tires according to any one of claims 1 to 6.

8. A tire comprising the tread rubber according to claim 7.

## INTERNATIONAL SEARCH REPORT

| International application No. |
|---|
| **PCT/JP2022/016941** |

| **A.** | **CLASSIFICATION OF SUBJECT MATTER** |
|---|---|

*B60C 1/00*(2006.01)i; *C08L 9/00*(2006.01)i; *C08L 9/06*(2006.01)i; *C08L 45/00*(2006.01)i; *C08K 3/04*(2006.01)i; *C08K 3/36*(2006.01)i
FI:   C08L9/06; C08L9/00; C08L45/00; C08K3/04; C08K3/36; B60C1/00 A

According to International Patent Classification (IPC) or to both national classification and IPC

| **B.** | **FIELDS SEARCHED** |
|---|---|

Minimum documentation searched (classification system followed by classification symbols)

C08K3/00-13/08; C08L1/00-101/14; B60C1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2017-71682 A (SUMITOMO RUBBER IND) 13 April 2017 (2017-04-13)<br>claims, paragraphs [0015], [0028], [0040], [0044], examples 19, 23, 24 | 1-8 |
| A | US 2019/0144643 A1 (KOLON INDUSTRIES, INC.) 16 May 2019 (2019-05-16)<br>claims, example 4 | 1-8 |
| A | WO 2016/104142 A1 (SUMITOMO RUBBER IND) 30 June 2016 (2016-06-30)<br>claims, examples 6, 10, comparative example 13 | 1-8 |
| A | JP 2019-31659 A (ASAHI KASEI CORP) 28 February 2019 (2019-02-28)<br>claims, example 12, comparative example 12 | 1-8 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/016941**

| Patent document cited in search report | | | Publication date (day/month/year) | Patent family member(s) | | | Publication date (day/month/year) |
|---|---|---|---|---|---|---|---|
| JP | 2017-71682 | A | 13 April 2017 | US | 2017/0096550 | A1 | |
| | | | | claims, paragraphs [0014], [0027], [0039], [0043], examples 19, 23, 24 | | | |
| | | | | EP | 3153329 | A1 | |
| | | | | CN | 106905574 | A | |
| US | 2019/0144643 | A1 | 16 May 2019 | WO | 2018/062933 | A2 | |
| | | | | EP | 3441427 | A2 | |
| | | | | KR | 10-2018-0036319 | A | |
| WO | 2016/104142 | A1 | 30 June 2016 | US | 2017/0327670 | A1 | |
| | | | | claims, examples 6, 10, comparative example 13 | | | |
| | | | | EP | 3228657 | A1 | |
| | | | | CN | 107001713 | A | |
| JP | 2019-31659 | A | 28 February 2019 | KR | 10-2019-0015125 | A | |
| | | | | CN | 109384982 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015079703 A1